# EUROPEAN PATENT SPECIFICATION

(11) **EP 3 277 736 B1**
(45) Date of publication and mention of the grant of the patent: **27.03.2019**
(21) Application number: 16717270.9
(22) Date of filing: 31.03.2016
(51) Int. Cl.: C08F 110/06, C08F 4/651, C08F 4/654

(54) **CATALYST COMPONENTS FOR THE POLYMERIZATION OF OLEFINS**
KATALYSATORKOMPONENTEN ZUR OLEFINPOLYMERISIERUNG
COMPOSANTS DE CATALYSEUR POUR LA POLYMERISATION D'OLEFINES

(30) Priority: 01.04.2015 EP 15162220
(43) Date of publication of application: 07.02.2018
(73) Proprietor: Basell Poliolefine Italia S.r.l., 20121 Milano (IT)
(72) Inventor: MIGNOGNA, Alessandro, 44122 Ferrara (IT); KASHULIN, Igor, Moscow 119607 (RU); MORINI, Giampiero, 44122 Ferrara (IT); NIFANT'EV, Ilya, Moscow 119526 (RU)
(74) Representative: Giberti, Stefano
(86) International application number: PCT/EP2016/057031
(87) International publication number: WO 2016/156473

(56) References cited:
- EP-A1- 2 803 679
- WO-A2-2006/096621

## Description

### FIELD OF THE INVENTION

The present disclosure relates to the field of chemistry. In particular it relates to catalyst components for the polymerization of olefins, in particular propylene, comprising a Mg dihalide based support on which are supported Ti atoms and an electron donor selected from a specific class of mercaptoesters derivatives. The present disclosure further relates to the catalysts obtained from said components and to their use in processes for the polymerization of olefins in particular propylene.

### BACKGROUND OF THE INVENTION

. Catalyst components for the stereospecific polymerization of olefins have been disclosed in the art. Concerning the polymerization of propylene, Ziegler-Natta catalysts are used which, in general terms, comprise a solid catalyst component, constituted by a magnesium dihalide on which are supported a titanium compound and an internal electron donor compound, used in combination with an Al-alkyl compound.. Conventionally however, when a higher crystallinity of the polymer is required, also an external donor (for example an alkoxysilane) is needed in order to obtain higher isotacticity. Esters of phthalic acid, particularly diisobutylphthalate, are used as internal donors in catalyst preparations. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised concerns due to the medical issues associated with their use and some compounds within this class have been classified as source of heavy health problems.

Consequently, research activities have been devoted to discover alternative classes of internal donors for use in the preparation of catalyst components for propylene polymerization.

One of the classes investigated is that of acyloxyesters as described in USP 7,351,778 which are formally obtained by esterification of hydroxyl esters derivatives. This document does not describe possible alternatives to these structures. Surprisingly, the applicant has found that a particular class of donors based on mercapto derivatives is suited to generate a wide arrange of molecules with equal or different functional groups which when used as internal donors generate catalysts showing a good balance of activity and stereospecificity.

### SUMMARY OF THE INVENTION

Accordingly, it is provided a catalyst component for the polymerization of olefins comprising Mg, Ti and an electron donor compound of formula (I) 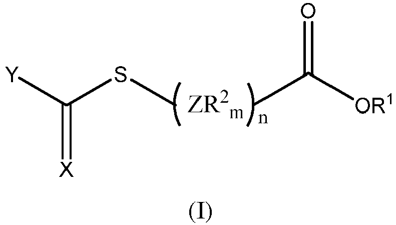 in which Z is selected from C, Si, O, N, S or P with the proviso that the atoms O, S, P and N are not directly linked to either the carboxylic group or the sulfur atom of formula (I), the R² groups, equal to or different from each other, are hydrogen or a C₁-C₂₀ hydrocarbon radicals, optionally containing a heteroatom selected from halogen, P, S, N,O and Si, which can be fused together to form one or more cycles, m is a number satisfying the valences of Z and n is an integer ranging from 1 to 10, X is O or S, Y is -OR³, -NR⁴R⁵ or R⁶ groups in which R¹ and R³ are selected from C₁-C₁₅ hydrocarbon groups, optionally containing a heteroatom selected from halogen, P, S, N,O, and Si, R⁴-R⁵ groups, independently, are hydrogen or R¹ groups and R⁶ groups have the same meaning as R¹ groups.

### DETAILED DESCRIPTION OF THE INVENTION

Preferably, Z is selected from C and Si. In a more preferred embodiment, Z is carbon.

In a particular embodiment, the (ZR²ₘ)ₙ group of formula (I) can be selected from the group consisting of aliphatic, alicyclic and aromatic bivalent radicals, optionally substituted with C₁-C₁₅ hydrocarbon groups and/or with heteroatoms selected from halogen, P, S, N, O and Si, and having a bridging chain length ranging from 1 to 6 atoms and especially from 1 to 4 atoms.

In a particularly preferred embodiment, the bridging group is an aliphatic or alicyclic bridging group having a bridging chain length of 1-6 carbon atoms. Among this class, particularly preferred bridging groups are those of formula -(CR⁷ₚ)ₛ- in which R⁷ is independently hydrogen or a C₁-C₂₀ hydrocarbon radicals, optionally substituted with heteroatoms selected from halogen, P, S, N, O and Si, which can be fused together to form one or more cycles, p is a number satisfying the available valence of carbon and s is a number from 1 to 6, preferably from 1 to 4.

Preferred structures in which the bridging group is an aliphatic or alicyclic bridging group are those of formula (II) 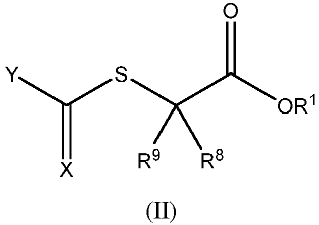 in which X, Y and R¹ have the same meaning previously described and R⁸-R⁹ groups are independently hydrogen or a C₁-C₂₀ hydrocarbon radicals, optionally substituted with heteroatoms selected from halogen, P, S, N, O and Si, which can be fused together to form one or more cycles. In connection with the structures of formula (II) X is O or S, Y is preferably a OR³ group and, more preferably, at least one of R⁸-R⁹ groups is different from hydrogen and particularly selected from C₁-C₁₀ alkyl groups.

Another group of preferred structures in which the bridging group is an aliphatic or alicyclic bridging group are those of formula (III) 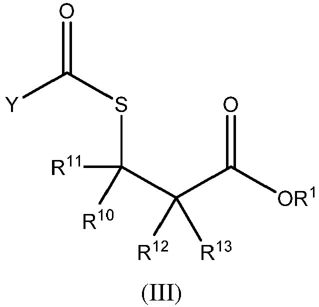 in which Y and R¹ has the same meaning previously described, R¹⁰-R¹³ groups are independently hydrogen or a C₁-C₂₀ hydrocarbon radicals, optionally substituted with heteroatoms selected from halogen, P, S, N, O and Si, which can be fused together to form one or more cycles.
Preferably, Y is a -OR³ group as previously defined. Preferably, R³ is a C₁-C₁₀ alkyl group and preferably a C₁-C₅ linear alkyl group especially ethyl.
In another preferred embodiment Y is -NR⁴R⁵, R¹⁰-R¹³ groups are independently hydrogen or a C₁-C₅ alkyl radicals and R¹ is a C₁-C₅ linear alkyl group especially ethyl.

When Y is R⁶ it is selected from phenyl rings. In a most preferred embodiment the phenyl ring is monosubstituted with a substituent belonging to hydrocarbon groups or halogen. Among hydrocarbon groups preferred substitutents are C₁-C₁₀ alkyl groups, C₆-C₁₄ aryl groups, C₃-C₁₅ cycloalkyl groups, and C₇-C₁₅ arylalkyl or alkylaryl groups. More preferably, they can be C₁-C₁₀ alkyl groups and even more preferably linear C₁-C₅ alkyl groups. The hydrocarbon substituents are preferably located in 4-position.

Halogens are also preferred substituents, and among them Cl, Br and F are the preferred halogens. Cl being the most preferred. Preferred positions are meta and/or para. Also other positions in addition to meta and/or para could be substituted with halogens and/or hydrocarbon groups.

Preferred structures of formula (III) are those in which at least one of R¹⁰-R¹¹ groups is selected from C₁-C₂₀ hydrocarbon radicals, preferably from C₁-C₁₀ alkyls, more preferably from C₃-C₁₀ linear alkyls.

Another class of preferred bridging group is the one based on aryl or alkylaryl groups which through the carbon atoms can act as a bridge. Among them, particularly preferred are the phenyl groups, optionally substituted with halogens or C₁-C₂₀ alkyl radicals.

Particularly preferred are the structures of formula (IV) 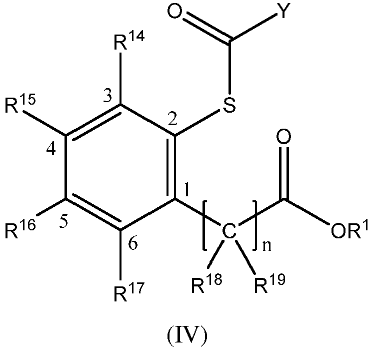 where Y and R¹ have the meaning previously defined; R¹⁸ to R¹⁹ groups, equal to or different from each other, are hydrogen or C₁-C₁₅ hydrocarbon groups, optionally containing a heteroatom selected from halogen, P, S, N,O, and Si which can be fused together to form one or more cycles, n is an integer from 0 to 2 and R¹⁴-R¹⁷, independently, are selected from hydrogen, halogens or C₁-C₁₅ hydrocarbon groups optionally substituted with heteroatoms selected from halogen, P, S, N, O and Si.
Preferably Y is a -OR³ group in which R³ is a C₁-C₁₀ alkyl group and preferably a C₁-C₅ linear alkyl group especially ethyl.
In a particularly preferred embodiment n is 0, R¹ is a C₁-C₁₀ alkyl group and R¹⁴-R¹⁷ are hydrogen.

Non limiting examples of structures of formulas (I) and (II) are the following:
butyl 2-(benzoylthio)propanoate, ethyl 2-((3-chlorobenzoyl)thio)-2-methylpropanoate, ethyl 2-((3-chlorobenzoyl)thio)acetate, ethyl 2-((3-chlorobenzoyl)thio)propanoate, ethyl 2-((4-butylbenzoyl)thio)-2-methylpropanoate, ethyl 2-((4-butylbenzoyl)thio)acetate, ethyl 2-((4-butylbenzoyl)thio)propanoate, ethyl 2-((4-chlorobenzoyl)thio)-2-methylpropanoate, ethyl 2-((4-chlorobenzoyl)thio)-3,3-dimethylbutanoate, ethyl 2-((4-chlorobenzoyl)thio)-3-methylbutanoate, ethyl 2-((4-chlorobenzoyl)thio)acetate, ethyl 2-((4-chlorobenzoyl)thio)propanoate, ethyl 2-((4-chlorophenylcarbonothioyl)thio)-2-methylpropanoate, ethyl 2-((4-ethylbenzoyl)thio)-2-methylpropanoate, ethyl 2-((4-ethylbenzoyl)thio)acetate, ethyl 2-((4-ethylbenzoyl)thio)propanoate, ethyl 2-((4-methylbenzoyl)thio)acetate, ethyl 2-((4-methylbenzoyl)thio)propanoate, ethyl 2-((4-propylbenzoyl)thio)acetate, ethyl 2-((4-propylbenzoyl)thio)propanoate, ethyl 2-((phenylcarbonothioyl)thio)propanoate, ethyl 2-(benzoylthio)-2-methylpropanoate, ethyl 2-(benzoylthio)-3-methylbutanoate, ethyl 2-(benzoylthio)-3-phenylpropanoate, ethyl 2-(benzoylthio)acetate, ethyl 2-(benzoylthio)propanoate, ethyl 2-methyl-2-((4-methylbenzoyl)thio)propanoate, ethyl 2-methyl-2-((4-propylbenzoyl)thio)propanoate, ethyl 2-methyl-2-((4-propylphenylcarbonothioyl)thio)propanoate, ethyl 3-methyl-2-((4-propylbenzoyl)thio)butanoate, ethyl 4-methyl-2-((4-propylbenzoyl)thio)pentanoate, propyl 2-((1-naphthoyl)thio)propanoate, propyl 2-((2-naphthoyl)thio)propanoate, propyl 2-(benzoylthio)propanoate, butyl 2-((diethylcarbamoyl)thio)-3-methylbutanoate, ethyl 2-((diethylcarbamothioyl)thio)propanoate, ethyl 2-((diethylcarbamoyl)thio)-2-ethylbutanoate, ethyl 2-((diethylcarbamoyl)thio)-2-isobutyl-4-methylpentanoate, ethyl 2-((diethylcarbamoyl)thio)-2-methylpropanoate, ethyl 2-((diethylcarbamoyl)thio)acetate, ethyl 2-((diethylcarbamoyl)thio)propanoate, ethyl 2-((dimethylcarbamothioyl)thio)-2-methylpropanoate, ethyl 2-((dimethylcarbamoyl)thio)-2-methylpropanoate, ethyl 2-((dimethylcarbamoyl)thio)acetate, ethyl 2-((dimethylcarbamoyl)thio)propanoate, ethyl 2-((dipropylcarbamothioyl)thio)-2-methylpropanoate, ethyl 2-((piperidine-1-carbonyl)thio)propanoate, ethyl 2-(carbamoylthio)-2-methylpropanoate, ethyl 2-(carbamoylthio)acetate, ethyl 2-(carbamoylthio)propanoate, ethyl 2-methyl-2-((pyrrolidine-1-carbonyl)thio)propanoate, isobutyl 2-((diethylcarbamothioyl)thio)-3,3-dimethylbutanoate, isobutyl 2-((diethylcarbamoyl)thio)-3-methylbutanoate, butyl 2-((ethoxycarbonyl)thio)-3-methylbutanoate, ethyl 2-((butoxycarbonyl)thio)propanoate, ethyl 2-((ethoxycarbonothioyl)thio)propanoate, ethyl 2-((ethoxycarbonyl)thio)-2-ethylbutanoate, ethyl 2-((ethoxycarbonyl)thio)-2-isobutyl-4-methylpentanoate, ethyl 2-((ethoxycarbonyl)thio)-2-methylpropanoate, ethyl 2-((ethoxycarbonyl)thio)acetate, ethyl 2-((ethoxycarbonyl)thio)propanoate, ethyl 2-((methoxycarbonothioyl)thio)-2-methylpropanoate, ethyl 2-((methoxycarbonyl)thio)-2-methylpropanoate, ethyl 2-((methoxycarbonyl)thio)acetate, ethyl 2-((methoxycarbonyl)thio)propanoate, ethyl 2-((phenoxycarbonyl)thio)acetate, ethyl 2-((phenoxycarbonyl)thio)propanoate, ethyl 2-methyl-2-((phenoxycarbonyl)thio)propanoate, ethyl 2-methyl-2-((propoxycarbonothioyl)thio)propanoate, ethyl 2-methyl-2-((propoxycarbonyl)thio)propanoate, isobutyl 2-((ethoxycarbonothioyl)thio)-3,3-dimethylbutanoate, isobutyl 2-((ethoxycarbonyl)thio)-3-methylbutanoate, ethyl 2-((2,2-dimethylpropanethioyl)thio)-3-methylbutanoate, ethyl 2-(acetylthio)-2-methylpropanoate, ethyl 2-(acetylthio)acetate, ethyl 2-(acetylthio)propanoate, ethyl 2-(acryloylthio)-4-methylpentanoate, ethyl 2-(ethanethioylthio)-2-methylpropanoate, ethyl 2-(ethanethioylthio)acetate, ethyl 2-(ethanethioylthio)propanoate, ethyl 2-(isobutyrylthio)-2-methylpropanoate, ethyl 2-(isobutyrylthio)-3-methylbutanoate, ethyl 2-(isobutyrylthio)acetate, ethyl 2-(isobutyrylthio)propanoate, ethyl 2-(pentanoylthio)acetate, ethyl 2-(propionylthio)propanoate, ethyl 2-methyl-2-((2-phenylacetyl)thio)propanoate, ethyl 2-methyl-2-((2-phenylethanethioyl)thio)propanoate, ethyl 3-methyl-2-((2-methylpropanethioyl)thio)butanoate, ethyl 3-methyl-2-(pivaloylthio)butanoate, ethyl 3-methyl-2-(propanethioylthio)butanoate, ethyl 3-methyl-2-(propionylthio)butanoate, isopentyl 2-(acetylthio)acetate, butyl 3-((3-chlorobenzoyl)thio)propanoate, butyl 3-((4-propylbenzoyl)thio)propanoate, butyl 3-(benzoylthio)-2-methylpropanoate, butyl 3-(benzoylthio)propanoate, ethyl 2,2-dimethyl-3-((4-methylbenzoyl)thio)propanoate, ethyl 2,2-dimethyl-3-((4-propylbenzoyl)thio)propanoate, ethyl 2-(benzoylthio)cyclohexanecarboxylate, ethyl 2-isobutyl-3-(pivaloylthio)-2-propylheptanoate, ethyl 2-methyl-3-((4-methylbenzoyl)thio)butanoate, ethyl 2-methyl-3-((4-methylbenzoyl)thio)propanoate, ethyl 2-methyl-3-((4-propylbenzoyl)thio)butanoate, ethyl 2-methyl-3-((4-propylbenzoyl)thio)propanoate, ethyl 3-((3-chlorobenzoyl)thio)-2,2-dimethylpropanoate, ethyl 3-((3-chlorobenzoyl)thio)-2-isobutyl-2-propylheptanoate, ethyl 3-((3-chlorobenzoyl)thio)-2-methylbutanoate, ethyl 3- ((3-chlorobenzoyl)thio)-2-methylpropanoate, ethyl 3-((3-chlorobenzoyl)thio)butanoate, ethyl 3-((3-chlorobenzoyl)thio)propanoate, ethyl 3-((4-chlorobenzoyl)thio)-2,2-dimethylpropanoate, ethyl 3-((4-chlorobenzoyl)thio)-2-methylbutanoate, ethyl 3-((4-chlorobenzoyl)thio)-2-methylpropanoate, ethyl 3-((4-chlorobenzoyl)thio)butanoate, ethyl 3-((4-chlorobenzoyl)thio)propanoate, ethyl 3-((4-methylbenzoyl)thio)butanoate, ethyl 3-((4-methylbenzoyl)thio)propanoate, ethyl 3-((4-propylbenzoyl)thio)butanoate, ethyl 3-((4-propylbenzoyl)thio)propanoate, ethyl 3-((4-propylphenylcarbonothioyl)thio)propanoate, ethyl 3-((phenylcarbonothioyl)thio)propanoate, ethyl 3-(acetylthio)propanoate, ethyl 3-(benzoylthio)-2,2-dimethylpropanoate, ethyl 3-(benzoylthio)-2-isobutyl-2-propylheptanoate, ethyl 3-(benzoylthio)-2-methylbutanoate, ethyl 3-(benzoylthio)-2-methylpropanoate, ethyl 3-(benzoylthio)butanoate, ethyl 3-(benzoylthio)propanoate, ethyl 3-(isobutyrylthio)butanoate, methyl 3-((3-chlorobenzoyl)thio)propanoate, butyl 3-((diethylcarbamoyl)thio)propanoate, butyl 3-((ethoxycarbonyl)thio)propanoate, ethyl 2-methyl-3-((phenoxycarbonyl)thio)propanoate, ethyl 2-methyl-3-((propoxycarbonyl)thio)butanoate, ethyl 3-((diethylcarbamothioyl)thio)-2-isobutyl-2-propylheptanoate, ethyl 3-((diethylcarbamoyl)thio)-2-isobutyl-2-propylheptanoate, ethyl 3-((diethylcarbamoyl)thio)-2-methylbutanoate, ethyl 3-((diethylcarbamoyl)thio)-2-methylpropanoate, ethyl 3-((diethylcarbamoyl)thio)propanoate, ethyl 3-((diisobutylcarbamoyl)thio)-2-methylpropanoate, ethyl 3-((dimethylcarbamoyl)thio)-2-methylbutanoate, ethyl 3-((dimethylcarbamoyl)thio)-2-methylpropanoate, ethyl 3-((diphenylcarbamoyl)thio)-2-methylpropanoate, ethyl 3-((ethoxycarbonyl)thio)-2-isobutyl-2-propylheptanoate, ethyl 3-((ethoxycarbonyl)thio)-2-methylbutanoate, ethyl 3-((ethoxycarbonyl)thio)-2-methylpropanoate, ethyl 3- ((isobutoxycarbonyl)thio)-2-methylpropanoate, methyl 3-((diethylcarbamothioyl)thio)propanoate, methyl 3-((diethylcarbamoyl)thio)butanoate, methyl 3-((diethylcarbamoyl)thio)propanoate, methyl 3-((ethoxycarbonothioyl)thio)propanoate, methyl 3-((ethoxycarbonyl)thio)butanoate, methyl 3-((ethoxycarbonyl)thio)propanoate, S-(2-(3-oxopentyl)phenyl) benzothioate, ethyl 4-((diethylcarbamoyl)thio)butanoate, ethyl 4-((ethoxycarbonothioyl)thio)butanoate, ethyl 4-((ethoxycarbonyl)thio)butanoate, ethyl 4-(benzoylthio)butanoate, O-ethyl S-(2-(3-oxopentyl)phenyl) carbonodithioate, O-ethyl S-(2-(3-oxopentyl)phenyl) carbonothioate, S-(2-(3-oxopentyl)phenyl) diethylcarbamothioate, ethyl 2-(2-((3-chlorobenzoyl)thio)phenyl)acetate, ethyl 2-(2-((4-chlorobenzoyl)thio)phenyl)acetate, ethyl 2-(2-((4-propylbenzoyl)thio)phenyl)acetate, ethyl 2-(2-(acetylthio)-5-(tert-butyl)-3-methylphenyl)acetate, ethyl 2-(2-(benzoylthio)-5-(tert-butyl)-3-methylphenyl)acetate, ethyl 2-(2-(benzoylthio)-5-(tert-butyl)phenyl)acetate, ethyl 2-(2-(benzoylthio)phenyl)-4-methylpentanoate, ethyl 2-(2-(benzoylthio)phenyl)acetate, ethyl 2-(5-(tert-butyl)-2-((2-methylpropanethioyl)thio)phenyl)acetate, ethyl 2-(5-(tert-butyl)-2-((3-chlorobenzoyl)thio)-3-methylphenyl)acetate, ethyl 2-(5-(tert-butyl)-2-((3-chlorobenzoyl)thio)phenyl)acetate, ethyl 2-(5-(tert-butyl)-2-((4-chlorobenzoyl)thio)-3-methylphenyl)acetate, ethyl 2-(5-(tert-butyl)-2-((4-chlorobenzoyl)thio)phenyl)acetate, ethyl 2-(5-(tert-butyl)-2-((4-propylbenzoyl)thio)phenyl)acetate, ethyl 2-(5-(tert-butyl)-2-((phenylcarbonothioyl)thio)phenyl)acetate, ethyl 2-(5-(tert-butyl)-2-(butyrylthio)-3-methylphenyl)acetate, ethyl 2-(5-(tert-butyl)-2-(isobutyrylthio)phenyl)acetate, ethyl 2-(5-(tert-butyl)-3-methyl-2-((4-propylbenzoyl)thio)phenyl)acetate, ethyl 2-(2-((diethylcarbamothioyl)thio)phenyl)acetate, ethyl 2-(2-((diethylcarbamoyl)thio)phenyl)acetate, ethyl 2-(2-((diethylcarbamoyl)thio)phenyl)propanoate, ethyl 2-(2-((dimethylcarbamoyl)thio)phenyl)acetate, ethyl 2-(2-((ethoxycarbonothioyl)thio)phenyl)acetate, ethyl 2-(2-((ethoxycarbonyl)thio)phenyl)acetate, ethyl 2-(2-((methoxycarbonyl)thio)phenyl)acetate, ethyl 2-(2-((phenoxycarbonothioyl)thio)phenyl)acetate, ethyl 2-(2-((phenoxycarbonyl)thio)phenyl)acetate, ethyl 2-(2-((phenoxycarbonyl)thio)phenyl)propanoate, ethyl 2-(2-((propoxycarbonyl)thio)phenyl)acetate, ethyl 2-(2-((pyrrolidine-1-carbonyl)thio)phenyl)acetate, ethyl 2-(5-(tert-butyl)-2-((diethylcarbamoyl)thio)-3-methylphenyl)acetate, ethyl 2-(5-(tert-butyl)-2-((ethoxycarbonyl)thio)-3-methylphenyl)acetate, ethyl 3-methyl-2-(2-((phenoxycarbonyl)thio)phenyl)butanoate, butyl 2-(benzoylthio)benzoate, ethyl 2-((2,2-dimethylpropanethioyl)thio)benzoate, ethyl 2-((2,4,6-trimethylbenzoyl)thio)benzoate, ethyl 2-((2-methylpropanethioyl)thio)benzoate, ethyl 2-((2-naphthoyl)thio)benzoate, ethyl 2-((2-phenylacetyl)thio)benzoate, ethyl 2-((3-chlorobenzoyl)thio)-3,5-diisopropylbenzoate, ethyl 2-((3-chlorobenzoyl)thio)benzoate, ethyl 2-((4-butylbenzoyl)thio)benzoate, ethyl 2-((4-chlorobenzoyl)thio)-3,5-diisopropylbenzoate, ethyl 2-((4-chlorobenzoyl)thio)benzoate, ethyl 2-((4-chlorophenylcarbonothioyl)thio)benzoate, ethyl 2-((4-propylbenzoyl)thio)benzoate, ethyl 2-(benzoylthio)-3,5-diisopropylbenzoate, ethyl 2-(benzoylthio)-5-(tert-butyl)-3-methylbenzoate, ethyl 2-(benzoylthio)-5-(tert-butyl)benzoate, ethyl 2-(benzoylthio)benzoate, ethyl 2-(ethanethioylthio)benzoate, ethyl 2-(isobutyrylthio)benzoate, ethyl 2-(pivaloylthio)benzoate, ethyl 2-(propionylthio)benzoate, ethyl 3,5-diisopropyl-2-((4-propylbenzoyl)thio)benzoate, ethyl 3,5-diisopropyl-2-((phenylcarbonothioyl)thio)benzoate, ethyl 5-(tert-butyl)-2-((3-chlorobenzoyl)thio)-3-methylbenzoate, ethyl 5-(tert-butyl)-2-((3-chlorobenzoyl)thio)benzoate, ethyl 5-(tert-butyl)-2-((4-chlorobenzoyl)thio)benzoate, ethyl 5-(tert-butyl)-2-((4-propylbenzoyl)thio)benzoate, ethyl 5-(tert-butyl)-2-(2-(4-chlorophenyl)-2-oxoethyl)-3-methylbenzoate, ethyl 5-(tert-butyl)-3-methyl-2-((4-propylbenzoyl)thio)benzoate, propyl 2-((4-chlorobenzoyl)thio)benzoate, butyl 2-((diethylcarbamoyl)thio)benzoate, ethyl 2-((diethylcarbamothioyl)thio)benzoate, ethyl 2-((diethylcarbamoyl)thio)-3,5-diisopropylbenzoate, ethyl 2-((diethylcarbamoyl)thio)-3,5-dimethylbenzoate, ethyl 2-((diethylcarbamoyl)thio)-3-methylbenzoate, ethyl 2-((diethylcarbamoyl)thio)-5-methylbenzoate, ethyl 2-((diethylcarbamoyl)thio)benzoate, ethyl 2-((dimethylcarbamoyl)thio)benzoate, ethyl 2-((dipropylcarbamoyl)thio)benzoate, ethyl 2-((ethoxycarbonyl)thio)-3,5-diisopropylbenzoate, ethyl 2-((ethoxycarbonyl)thio)benzoate, ethyl 2-((methoxycarbonyl)thio)benzoate, ethyl 2-((piperidine-1-carbonyl)thio)benzoate, ethyl 2-((propoxycarbonyl)thio)benzoate, ethyl 2-((pyrrolidine-1-carbonothioyl)thio)benzoate, ethyl 2-((pyrrolidine-1-carbonyl)thio)benzoate, ethyl 2-(carbamoylthio)benzoate, ethyl 5-(tert-butyl)-2-((diethylcarbamothioyl)thio)-3-methylbenzoate, ethyl 5-(tert-butyl)-2-((diethylcarbamoyl)thio)-3-methylbenzoate, ethyl 5-(tert-butyl)-2-((ethoxycarbonothioyl)thio)-3-methylbenzoate, ethyl 5-(tert-butyl)-2-((ethoxycarbonyl)thio)-3-methylbenzoate, propyl 2-((diethylcarbamoyl)thio)benzoate, ethyl 2-((ethoxycarbonothioyl)thio)acetate, ethyl 3-((ethoxycarbonyl)thio)butanoate, methyl 3-((diethylcarbamoyl)thio)propanoate, ethyl 3-((diethylcarbamoyl)thio)butanoate, ethyl 3-((ethoxycarbonothioyl)thio)propanoate, ethyl 2-((ethoxycarbonyl)thio)benzoate, ethyl 3-(acetylthio)-4-methylpentanoate, ethyl 3-((3-chlorobenzoyl)thio)hexanoate, ethyl 3-((3-chlorobenzoyl)thio)octanoate, ethyl 3-((ethoxycarbonyl)thio)hexanoate, ethyl 3-((ethoxycarbonyl)thio)-4-methylpentanoate, ethyl 3-((ethoxycarbonyl)thio)octanoate, ethyl 3-((ethoxycarbonyl)thio)-3-phenylpropanoate, ethyl 3-(4-(tert-butyl)phenyl)-3-((ethoxycarbonyl)thio)propanoate, ethyl 3-(2,5-dimethylphenyl)-3-((ethoxycarbonyl)thio)propanoate, ethyl 3-((diethylcarbamoyl)thio)hexanoate, ethyl 3-((diethylcarbamoyl)thio)-5-methylhexanoate, ethyl 3-((diethylcarbamoyl)thio)octanoate.

The electron donors disclosed in the present application can be prepared from commercially available mercapto-ester precursors which can be reacted with proper reatcants to form the Y derivative. In case the mercapto-ester precursor is not available the electron donors can be prepared following the synthetic approach described in US2011/0282089 which is incorporated by reference.

Preferably, the final amount of electron donor compound in the solid catalyst component ranges from 1 to 25% by weight preferably in the range from 3 to 20% by weight.

As explained above, the catalyst components comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is disclosed in the patent literature as a support for Ziegler-Natta catalysts. Patents USP 4,298,718 and USP 4,495,338 were the first to describe the use of these compounds in Ziegler-Natta catalysis. It is disclosed in these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present disclosure are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

In a particular embodiment the amount of Ti atoms is higher than 2.5%wt more preferably higher than 3.0% and especially in the range 3.0 to 8% with respect to the total weight of said catalyst component.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-130°C and kept at this temperature for 0.5-2 hours. The treatment with TiCl₄ can be carried out one or more times. The mercapto derivative electron donor compound is preferably added during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) which can range between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å can range from 0.3 to 1.5 cm³/g, preferably from 0.45 to 1 cm³/g. The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of suitable chemical reactions.

Regardless of the preparation method used, the final amount of the electron donor compound of formula (I) is such that its molar ratio with respect to the Ti atoms is from 0.01 to 2, preferably from 0.05 to 1.2.

The solid catalyst components according to the present disclosure are converted into catalysts for the polymerization of olefins by reacting them with organoaluminum compounds according to known methods.

In particular, it is an object of the present invention a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,.
(iii) an external electron donor compound

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

External electron-donor compounds include silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further embodiment of this disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component comprising Mg, Ti and an electron donor compound of formula (I) as above described;
(ii) an alkylaluminum compound and,
(iii) optionally an electron-donor compound (external donor).

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization temperature can range from 20 to 120°C, preferably of from 40 to 80°C. When the polymerization is carried out in gas-phase the operating pressure ranges between 0.5 and 5 MPa, preferably between 1 and 4 MPa. In the bulk polymerization the operating pressure may range between 1 and 8 MPa, preferably between 1.5 and 5 MPa.

In the polymerization of propylene using the catalyst of the present disclosure and under the standard polymerization conditions described in the experimental section it is possible to obtain polymerization activities ranging from 25 to 50 kg/g cat. combined with high polymer isotacticity expressed by a value of xylene insoluble matter of higher than 97.5% preferably higher than 98%wt.

The following examples are given in order to further illustrate the subject-matter without limiting it.

### EXAMPLES

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg)

### Donor synthesis

The electron donors in the examples 1-5, 7, 10-13, 16-17, have been prepared from commercially available mercapto-ester precursors. The electron donors in the other examples have been prepared according to the synthetic approach described in US2011/0282089 also illustrated herebelow:

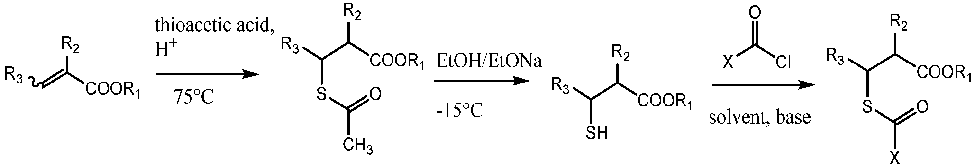

### General procedure for the preparation of the solid catalyst component

All the catalyst components have been prepared according to the following procedure.

Into a 500 mL round bottom flask, equipped with mechanical stirrer, cooler and thermometer 250 mL of TiCl₄ were introduced at room temperature under nitrogen atmosphere. After cooling to 0°C, while stirring, the internal donor and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### General procedure for the polymerization of propylene

All the solid catalyst components have been tested according to the following procedure. A 4-liter steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of AlEt₃, 0.076 g of dicyclopentyldimethoxysilane (D donor) and 0.006÷0.010 g of solid catalyst component. The autoclave was closed; subsequently 2.0 Nl of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

**Table 1. Composition and performance of exemplified catalysts**

| **Ex.** | **Catalyst compostion** | | | **Polymerization** | | |
|---|---|---|---|---|---|---|
| | **Internal Donor** | | **Ti** | **Mileage** | **XI** | **MIL** |
| | **Structure / Name** | **%wt** | **%wt** | **kg/g** | **%wt** | **g/10'** |
| 1 | 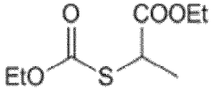 | 10.1 | 2.9 | 32 | 96.6 | 8.1 |
| | ethyl 2-((ethoxycarbonyl)thio)propanoate | | | | | |
| 2 | 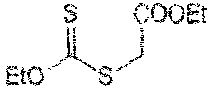 | 5.0 | 4.0 | 32 | 95.2 | 6.6 |
| | ethyl 2-((ethoxycarbonothioyl)thio)acetate | | | | | |
| 3 | 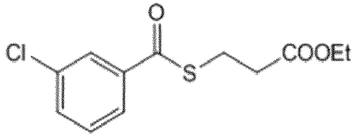 | 10.7 | 2.8 | 21 | 96.3 | 5.3 |
| | ethyl 3-((3-chlorobenzoyl)thio)propanoate | | | | | |
| 4 | 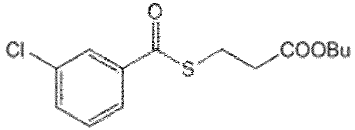 | 15.0 | 2.6 | 18 | 98.3 | 5.5 |
| | butyl 3-((3-chlorobenzoyl)thio)propanoate | | | | | |
| 5 | 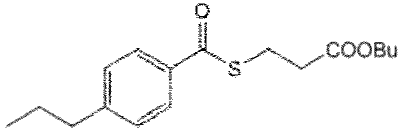 | 15.4 | 2.9 | 18 | 96.3 | 9.9 |
| | butyl 3-((4-propylbenzoyl)thio)propanoate | | | | | |
| 6 | 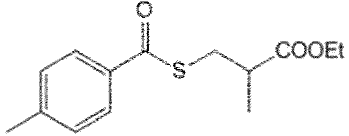 | 13.3 | 3.2 | 24 | 96.0 | 8.3 |
| | ethyl 2-methyl-3-((4-methylbenzoyl)thio)propanoate | | | | | |
| 7 | 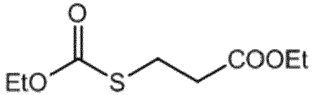 | 8.4 | 2.4 | 22 | 98.4 | 4.5 |
| | ethyl 3-((ethoxycarbonyl)thio)propanoate | | | | | |
| 8 | 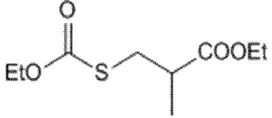 | 10.2 | 2.4 | 29 | 97.3 | 3.7 |
| | ethyl 3-((ethoxycarbonyl)thio)-2-methylpropanoate | | | | | |
| 9 | 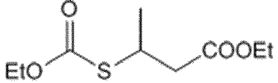 | 12.0 | 2.3 | 34 | 98.3 | 3.6 |
| | ethyl 3-((ethoxycarbonyl)thio)butanoate | | | | | |
| 10 | 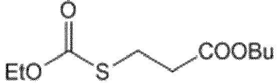 | 8.7 | 2.2 | 27 | 98.3 | 4.7 |
| | butyl 3-((ethoxycarbonyl)thio)propanoate | | | | | |
| 11 | 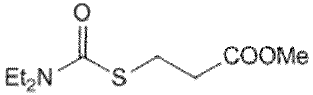 | 4.9 | 3.3 | 19 | 97.0 | 3.1 |
| | methyl 3-((diethylcarbamoyl)thio)propanoate | | | | | |
| 12 | 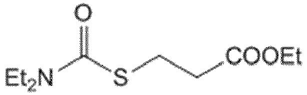 | 11.7 | 2.6 | 27 | 97.5 | 3.7 |
| | ethyl 3-((diethylcarbamoyl)thio)propanoate | | | | | |
| 13 | 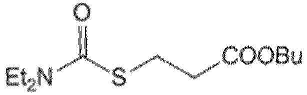 | 9.7 | 2.8 | 27 | 97.0 | 3.5 |
| | butyl 3-((diethylcarbamoyl)thio)propanoate | | | | | |
| 14 | 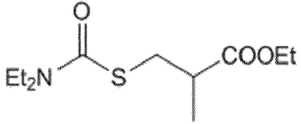 | 9.9 | 2.4 | 29 | 96.6 | 3.1 |
| | ethyl 3-((diethylcarbamoyl)thio)-2-methylpropanoate | | | | | |
| 15 | 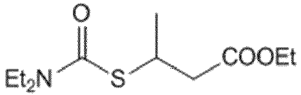 | 13.0 | 2.5 | 41 | 97.2 | 2.8 |
| | ethyl 3-((diethylcarbamoyl)thio)butanoate | | | | | |
| 16 | 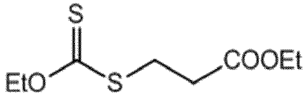 | n.d. | 3.1 | 22 | 96.6 | 6.2 |
| | ethyl 3-((ethoxycarbonothioyl)thio)propanoate | | | | | |
| 17 | 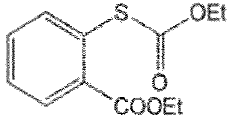 | 9.7 | 3.6 | 29 | 94.2 | 7.5 |
| | ethyl 2-((ethoxycarbonyl)thio)benzoate | | | | | |
| 18 | 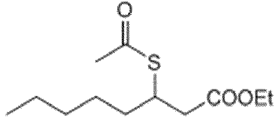 | n.d. | 3.2 | 34 | 95.9 | 9.3 |
| | ethyl 3-(acetylthio)octanoate | | | | | |
| 19 | 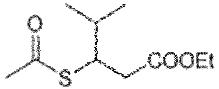 | n.d. | 3.4 | 28 | 95.8 | 10.5 |
| | ethyl 3-(acetylthio)-4-methylpentanoate | | | | | |
| 20 | 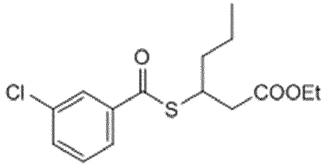 | 18.0 | 2.6 | 42 | 97.8 | 4.8 |
| | ethyl 3-((3-chlorobenzoyl)thio)hexanoate | | | | | |
| 21 | 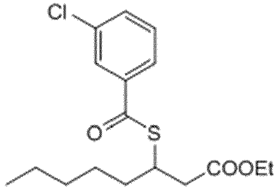 | 20.6 | 2.7 | 50 | 97.7 | 4.7 |
| | ethyl 3-((3-chlorobenzoyl)thio)octanoate | | | | | |
| 22 | 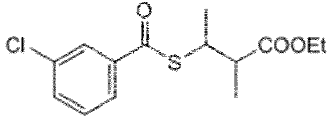 | 16.1 | 2.9 | 36 | 97.1 | 4.3 |
| | ethyl 3-((3-chlorobenzoyl)thio)-2-methylbutanoate | | | | | |
| 23 | 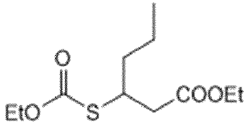 | 18.1 | 2.4 | 41 | 98.6 | 2.3 |
| | ethyl 3-((ethoxycarbonyl)thio)hexanoate | | | | | |
| 24 | 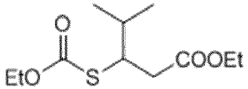 | 15.6 | 2.8 | 24 | 98.1 | 4.4 |
| | ethyl 3-((ethoxycarbonyl)thio)-4-methylpentanoate | | | | | |
| 25 | 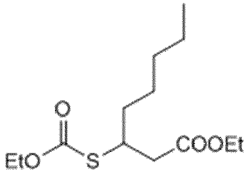 | 16.2 | 3.0 | 54 | 98.7 | 4.7 |
| | ethyl 3-((ethoxycarbonyl)thio)octanoate | | | | | |
| 26 | 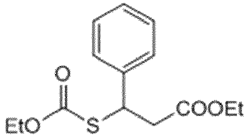 | 16.4 | 2.8 | 35 | 98.1 | 5.1 |
| | ethyl 3-((ethoxycarbonyl)thio)-3-phenylpropanoate | | | | | |
| 27 | 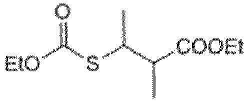 | 14.0 | 2.9 | 44 | 98.3 | 4.0 |
| | ethyl 3-((ethoxycarbonyl)thio)-2-methylbutanoate | | | | | |
| 28 | 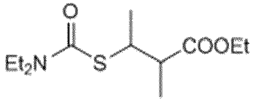 | 12.1 | 2.7 | 47 | 97.6 | 4.6 |
| | ethyl 3-((diethylcarbamoyl)thio)-2-methylbutanoate | | | | | |
| 29 | 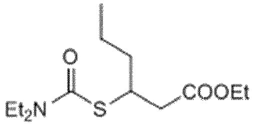 | 12.5 | 2.7 | 58 | 98.2 | 1.9 |
| | ethyl 3-((diethylcarbamoyl)thio)hexanoate | | | | | |
| 30 | 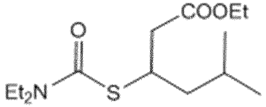 | 13.1 | 3.3 | 50 | 97.0 | 5.0 |
| | ethyl 3-((diethylcarbamoyl)thio)-5-methylhexanoate | | | | | |
| 31 | 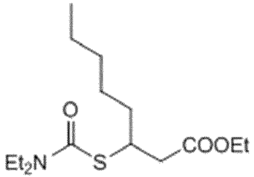 | 13.6 | 3.2 | 62 | 97.7 | 4.0 |
| | ethyl 3-((diethylcarbamoyl)thio)octanoate | | | | | |

## Claims

1. A solid catalyst component for the polymerization of olefins comprising Mg, Ti, Cl and at least an electron donor compound of formula (I) 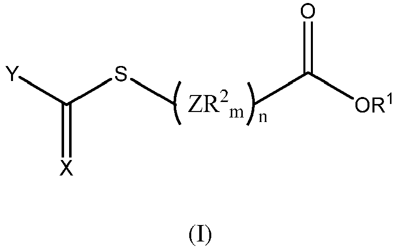 in which Z is selected from C, Si, O, N, S or P with the proviso that the atoms O, S, P and N are not directly linked to either the carboxylic group or the sulfur atom of formula (I), the R² groups, equal to or different from each other, are hydrogen or a C₁-C₂₀ hydrocarbon radicals, optionally containing a heteroatom selected from halogen, P, S, N, O and Si, which can be fused together to form one or more cycles, m is a number satisfying the valences of Z and n is an integer ranging from 1 to 10, X is O or S, Y is - OR³, -NR⁴R⁵ or R⁶ groups in which R¹ and R³ are selected from C₁-C₁₅ hydrocarbon groups optionally containing a heteroatom selected from halogen, P, S, N,O, and Si, R⁴-R⁵ groups, independently, are hydrogen or R¹ groups and R⁶ groups have the same meaning as R¹ groups.

2. The catalyst component according to claim 1 in Z is selected from C and Si.

3. The catalyst according to claim 2 in which -(ZR²ₘ)ₙ- is selected from the group consisting of aliphatic, alicyclic and aromatic bivalent radicals, optionally substituted with C₁-C₁₅ hydrocarbon groups and/or with heteroatoms selected from halogen, P, S, N, O and Si, and having a bridging chain length ranging from 1 to 6 atoms.

4. The catalyst component according to claim 3 in which the electron donor compound has the following formula (II) 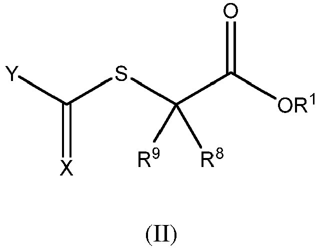 in which X, Y and R¹ have the same meaning specified in claim 1 and R⁸-R⁹ groups are independently hydrogen or a C₁-C₂₀ hydrocarbon radicals, optionally substituted with heteroatoms selected from halogen, P, S, N, O and Si, which can be fused together to form one or more cycles.

5. The catalyst according to claim 4 in which X is O or S, and Y is an OR³ group.

6. The catalyst according to claim 5 in which at least one of R⁸-R⁹ groups is different from hydrogen and selected from C₁-C₁₀ alkyl groups.

7. The catalyst component according to claim 3 in which the electron donor compound is selected from those of formula (III) 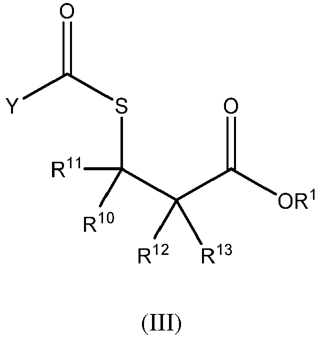 In which Y and R¹ have the same meaning specified in claim 1, R¹⁰-R¹³ groups are independently hydrogen or a C₁-C₂₀ hydrocarbon radicals, optionally substituted with heteroatoms selected from halogen, P, S, N, O and Si, which can be fused together to form one or more cycles.

8. The solid catalyst component of claim 7 in which Y is a -OR³ group in which R³ is a C₁-C₁₀ alkyl group.

9. The solid catalyst component according to claim 7 in which Y is -NR⁴R⁵, R¹⁰ to R¹³ groups are independently hydrogen or a C₁-C₅ alkyl radicals and R¹ is a C₁-C₅ linear alkyl group.

10. The solid catalyst component according to claim 7 in which R⁶ it is selected from phenyl rings monosubstituted with a substituent belonging to hydrocarbon groups or halogen.

11. The solid catalyst component according to one or more of claims 7-10 in which at least one of R¹⁰-R¹¹ groups is selected from C₁-C₂₀ hydrocarbon radicals

12. The catalyst component according to claim 3 in which the electron donor compound is selected from those of formula (IV) 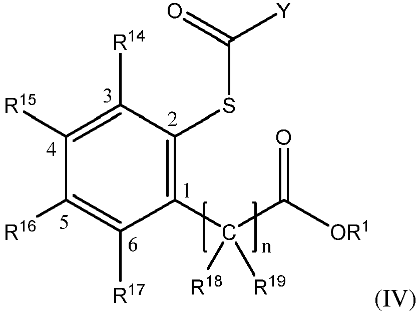 where Y and R¹ have the same meaning specified in claim 1; R¹⁸ to R¹⁹ groups, equal to or different from each other, are hydrogen or C₁-C₁₅ hydrocarbon groups, optionally containing a heteroatom selected from halogen, P, S, N,O, and Si which can be fused together to form one or more cycles, n is an integer from 0 to 2 and R¹⁴-R¹⁷, independently, are selected from hydrogen, halogens or C₁-C₁₅ hydrocarbon groups optionally substituted with heteroatoms selected from halogen, P, S, N, O and Si.

13. The catalyst component according to claim 12 in which n is 0, Y is a -OR³ group in which R³ is a C₁-C₁₀ alkyl group, R¹ is a C₁-C₁₀ alkyl group and R¹⁴-R¹⁷ are hydrogen.

14. A catalyst for the polymerization of olefins comprising the product of the reaction between:
- the solid catalyst component according to any of the preceding claims and
- an alkylaluminum compound and optionally,
- an external electron donor compound.

15. A process for the (co)polymerization of olefins CH₂=CHR'. in which R' is hydrogen or a hydrocarbyl radical with 1-12 carbon atoms, carried out in the presence of a catalyst system comprising the catalyst of claim 14.

## Patentansprüche

1. Feste Katalysatorkomponente für die Polymerisation von Olefinen, umfassend Mg, Ti, Cl und mindestens eine Elektronendonorverbindung der Formel (I) 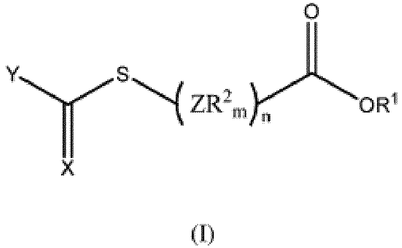 in der Z ausgewählt ist aus C, Si, O, N, S oder P mit der Maßgabe, dass die Atome O, S, P und N nicht direkt mit entweder der Carboxylgruppe oder dem Schwefelatom der Formel (I) verknüpft sind, die Gruppen R², die gleich oder voneinander verschieden sein können, Wasserstoff oder C₁-C₂₀ -Kohlenwasserstoffreste sind, die gegebenenfalls ein Heteroatom ausgewählt aus Halogen, P, S, N, O und Si enthalten, und miteinander kondensiert sein können, um einen oder mehrere Cyclen zu bilden, m eine Zahl ist, die die Valenzen von Z absättigt, und n eine ganze Zahl im Bereich von 1 bis 10 ist, X O oder S ist, Y die Gruppen -OW³, -NR⁴R⁵ oder R⁶ ist, wobei R¹ und R³ ausgewählt sind aus C₁-C₁₅-Kohlenwasserstoffgruppen, die gegebenenfalls ein Heteroatom ausgewählt aus Halogen, P, S, N,O und Si enthalten, die Gruppen R⁴ bis R⁵ unabhängig Wasserstoff oder Gruppen R¹ sind, und die Gruppen R⁶ die gleiche Bedeutung wie die Gruppen R¹ haben.

2. Katalysatorkomponente nach Anspruch 1, wobei Z ausgewählt ist aus C und Si.

3. Katalysatorkomponente nach Anspruch 2, wobei -(ZR²ₘ)ₙ- ausgewählt ist aus der Gruppe bestehend aus aliphatischen, alicyclischen und aromatischen zweiwertigen Resten, die gegebenenfalls mit C₁-C₁₅-Kohlenwasserstoffgruppen und/oder mit Heteroatomen ausgewählt aus Halogen, P, S, N, O und Si substituiert sind, und mit einer Brückenkettenlänge im Bereich von 1 bis 6 Atomen.

4. Katalysatorkomponente nach Anspruch 3, wobei die Elektronendonorverbindung die folgende Formel (II) hat: 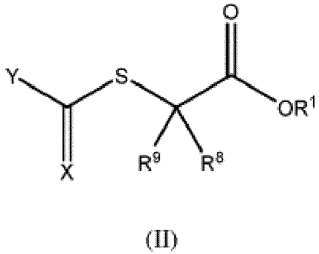 wobei X, Y und R¹ die gleiche Bedeutung wie in Anspruch 1 haben, und die Gruppen R⁸ bis R⁹ unabhängig Wasserstoff oder C₁-C₂₀-Kohlenwasserstoffreste sind, die gegebenenfalls mit Heteroatomen ausgewählt aus Halogen, P, S, N, O und Si substituiert sind, die unter Bildung von einem oder mehreren Cyclen miteinander kondensiert sein können.

5. Katalysator nach Anspruch 4, wobei X O oder S ist, und Y eine Gruppe OR³ ist.

6. Katalysator nach Anspruch 5, wobei mindestens eine der Gruppen R⁸ bis R⁹ von Wasserstoff verschieden ist und ausgewählt ist aus C₁-C₁₀-Alkylgruppen.

7. Katalysatorkomponente nach Anspruch 3, wobei die Elektronendonorverbindung ausgewählt ist aus jenen der Formel (III) 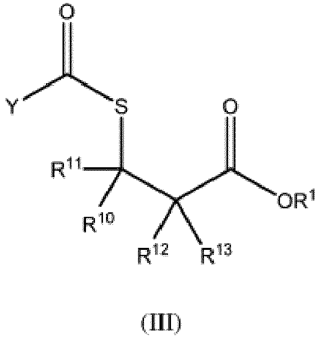 wobei Y und R¹ die gleiche Bedeutung wie in Anspruch 1 haben, die Gruppen R¹⁰ bis R¹³ unabhängig Wasserstoff oder C₁-C₂₀-Kohlenwasserstoffreste sind, die gegebenenfalls mit Heteroatomen ausgewählt aus Halogen, P, S, N, O und Si substituiert sind, und unter Bildung von einem oder mehreren Cyclen miteinander kondensiert sein können.

8. Feste Katalysatorkomponente nach Anspruch 7, wobei Y eine Gruppe -OR³ ist, worin R³ eine C₁-C₁₀-Alkylgruppe ist.

9. Feste Katalysatorkomponente nach Anspruch 7, wobei Y -NR⁴R⁵ ist, die Gruppen R¹⁰ bis R¹³ unabhängig Wasserstoff oder C₁-C₅-Alkylreste sind, und R¹ eine lineare C₁-C₅-Alkylgruppe ist.

10. Feste Katalysatorkomponente nach Anspruch 7, wobei R⁶ ausgewählt ist aus Phenylringen, die mit einem Substituenten monosubstituiert sind, der zu Kohlenwasserstoffgruppen oder Halogen gehört.

11. Feste Katalysatorkomponente nach einem der Ansprüche 7 bis 10, wobei mindestens eine der Gruppen R¹⁰ bis R¹¹ ausgewählt ist aus C₁-C₂₀-Kohlenwasserstoffresten.

12. Katalysatorkomponente nach Anspruch 3, wobei die Elektronendonorverbindung ausgewählt ist aus jenen der Formel (IV) 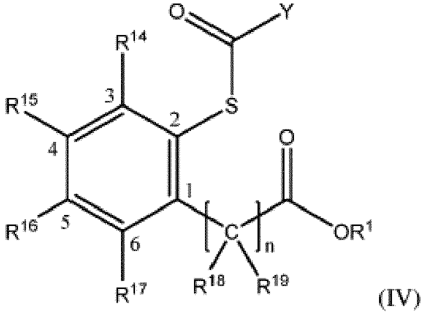 wobei Y und R¹ die gleiche Bedeutung wie in Anspruch 1 haben; die Gruppen R¹⁸ bis R¹⁹, die gleich oder voneinander verschieden sein können, Wasserstoff oder C₁-C₁₅-Kohlenwasserstoffgruppen sind, die gegebenenfalls ein Heteroatom ausgewählt aus Halogen, P, S, N,O und Si enthalten, die unter Bildung von einem oder mehreren Cyclen miteinander kondensiert sein können, n eine ganze Zahl von 0 bis 2 ist, und R¹⁴ bis R¹⁷ unabhängig ausgewählt sind aus Wasserstoff, Halogenen oder C₁-C₁₅-Kohlenwasserstoffgruppen, die gegebenenfalls mit Heteroatomen ausgewählt aus Halogen, P, S, N, O und Si substituiert sind.

13. Katalysatorkomponente nach Anspruch 12, wobei n 0 ist, Y eine Gruppe -OR³ ist, in der R³ eine C₁-C₁₀-Alkylgruppe ist, R¹ eine C₁-C₁₀-Alkylgruppe ist und R¹⁴ bis R¹⁷ Wasserstoff sind.

14. Katalysator zur Polymerisation von Olefinen, umfassend das Produkt der Reaktion zwischen:
- der festen Katalysatorkomponente gemäß einem der vorhergehenden Ansprüche und
- einer Alkylaluminiumverbindung und gegebenenfalls
- einer externen Elektronendonorverbindung.

15. Verfahren für die (Co)polymerisation von Olefinen CH₂=CHR', wobei R' Wasserstoff oder ein Kohlenwasserstoffrest mit 1 bis 12 Kohlenstoffatomen ist, welches in Gegenwart eines Katalysatorsystems durchgeführt wird, das den Katalysator gemäß Anspruch 14 umfasst.

## Revendications

1. Composant de catalyseur solide pour la polymérisation d'oléfines comprenant Mg, Ti, Cl et au moins un donneur d'électrons de formule (I) 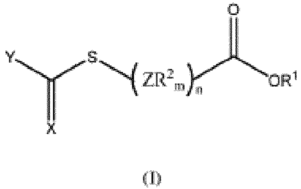 dans laquelle Z est choisi parmi C, Si, O, N, S ou P à la condition que les atomes O, S, P et N ne soient pas directement liés soit au groupe carboxylique, soit à l'atome de soufre de la formule (I), les groupes R², identiques ou différents les uns des autres, sont hydrogène ou un radical hydrocarboné en C₁-C₂₀, contenant optionnellement un hétéroatome choisi parmi halogène, P, S, N, O et Si, qui peuvent être fusionnés ensemble pour former un ou plusieurs cycles, m est un nombre satisfaisant aux valences de Z et n est un nombre entier allant de 1 à 10, X représente O ou S, Y représente -OR³, les groupes -NR⁴R⁵ ou R⁶, dans lesquels R¹ et R³ sont choisis parmi des groupes hydrocarbonés en C₁-C₁₅ contenant optionnellement un hétéroatome choisi parmi halogène, P, S, N, O et Si, les groupes R⁴-R⁵, indépendamment, sont hydrogène ou des groupes R¹ et les groupes R⁶ ont la même signification que les groupes R¹.

2. Composant de catalyseur selon la revendication 1 dans Z étant choisi parmi C et Si.

3. Catalyseur selon la revendication 2 dans lequel-(ZR²ₘ)ₙ- est choisi dans le groupe constitué par les radicaux bivalents aliphatiques, alicycliques et aromatiques, optionnellement substitués par des groupes hydrocarbonés en C₁-C₁₅ et/ou par des hétéroatomes choisis parmi halogène, P, S, N, O et Si, et ayant une longueur de chaîne de pontage allant de 1 à 6 atomes.

4. Composant de catalyseur selon la revendication 3 dans lequel le composé donneur d'électrons a la formule suivante (II) 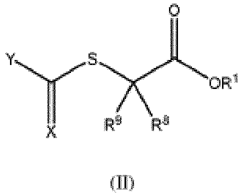 dans laquelle X, Y et R¹ ont la même signification que celle indiquée dans la revendication 1 et les groupes R⁸-R⁹ sont indépendamment hydrogène ou un radical hydrocarboné en C₁-C₂₀, optionnellement substitué par des hétéroatomes choisis parmi halogène, P, S, N, O et Si, qui peuvent être fusionnés ensemble pour former un ou plusieurs cycles.

5. Catalyseur selon la revendication 4 dans lequel X représente O ou S, et Y représente un groupe OR³.

6. Catalyseur selon la revendication 5 dans lequel au moins l'un des groupes R⁸-R⁹ est différent de l'hydrogène et est choisi parmi des groupes alkyle en C₁-C₁₀.

7. Composant de catalyseur selon la revendication 3 dans lequel le composé donneur d'électrons est choisi parmi ceux de formule (III) 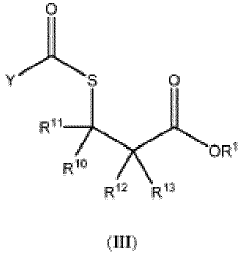 dans laquelle Y et R¹ ont la même signification que celle indiquée dans la revendication 1, les groupes R¹⁰-R¹³ sont indépendamment hydrogène ou un radical hydrocarboné en C₁-C₂₀, optionnellement substitué par des hétéroatomes choisis parmi halogène, P, S, N, O et Si, qui peuvent être fusionnés ensemble pour former un ou plusieurs cycles.

8. Composant de catalyseur solide selon la revendication 7, dans lequel Y représente un groupe -OR³ dans lequel R³ est un groupe alkyle en C₁-C₁₀.

9. Composant de catalyseur solide selon la revendication 7 dans lequel Y représente -NR⁴R⁵, les groupes de R¹⁰ à R¹³ sont indépendamment hydrogène ou un radical alkyle en C₁-C₅ et R¹ est un groupe alkyle linéaire en C₁-C₅.

10. Composant de catalyseur solide selon la revendication 7 dans lequel R⁶ est choisi parmi les cycles phényle monosubstitués par un substituant appartenant à des groupes hydrocarbonés ou à halogène.

11. Composant de catalyseur solide selon une ou plusieurs des revendications 7 à 10 dans lequel au moins un des groupes R¹⁰-R¹¹ est choisi parmi des radicaux hydrocarbonés en C₁-C₂₀.

12. Composant de catalyseur selon la revendication 3 dans lequel le composé donneur d'électrons est choisi parmi ceux de formule (IV) 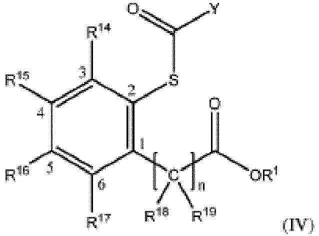 où Y et R¹ ont la même signification que celle indiquée dans la revendication 1 ; les groupes de R¹⁸ à R¹⁹, identiques ou différents les uns des autres, sont hydrogène ou des groupes hydrocarbonés en C₁-C₁₅, contenant optionnellement un hétéroatome choisi parmi halogène, P, S, N, O, et Si qui peuvent être fusionnés ensemble pour former un ou plusieurs cycles, n est un nombre entier allant de 0 à 2 et R¹⁴-R¹⁷, indépendamment, sont choisis parmi hydrogène, les halogènes ou des groupes hydrocarbonés en C₁-C₁₅ optionnellement substitués par des hétéroatomes choisis parmi halogène, P, S, N, O et Si.

13. Composant de catalyseur selon la revendication 12 dans lequel n est égal à 0, Y représente un groupe -OR³ dans lequel R³ est un groupe alkyle en C₁-C₁₀, R¹ est un groupe alkyle en C₁-C₁₀ et R¹⁴-R¹⁷ sont hydrogène.

14. Catalyseur pour la polymérisation d'oléfines comprenant le produit de la réaction entre :
- le composant de catalyseur solide selon l'une quelconque des revendications précédentes et
- un composé de l'alkylaluminium et optionnellement,
- un composé donneur d'électrons externe.

15. Procédé pour la (co)polymérisation d'oléfines CH₂=CHR', dans lesquelles R' est hydrogène ou un radical hydrocarbyle ayant de 1 à 12 atomes de carbone, réalisée en présence d'un système catalyseur comprenant le catalyseur selon la revendication 14.
